# FASCICULE DE BREVET EUROPEEN

(11) **EP 3 599 453 B1**
(45) Date de publication et mention de la délivrance du brevet: **27.12.2023**
(21) Numéro de dépôt: 19184070.1
(22) Date de dépôt: 03.07.2019
(51) Int. Cl.: G01M 15/14, F01D 21/00, G01N 21/01, G06Q 10/00, G06T 19/00, G02B 27/00, F01D 25/28

(54) **BANC D'ESSAI DE TURBOMACHINE**
PRÜFSTAND FÜR TURBOMASCHINE
TURBOMACHINE TEST BENCH

(30) Priorité: 10.07.2018 BE 201805485
(43) Date de publication de la demande: 29.01.2020
(73) Titulaire: Safran Aero Boosters SA, 4041 Herstal (BE)
(72) Inventeur: LACROIX, Alain, 4160 Anthisnes (BE)
(74) Mandataire: Lecomte & Partners

(56) Documents cités:
- EP-A1- 3 290 897
- WO-A1-2015/125066
- US-A1- 2013 278 631
- US-A1- 2014 207 874
- US-B2- 9 661 156

## Description

### Domaine technique

L'invention concerne la maintenance d'équipements aéronautiques et plus particulièrement un système d'assistance pour effectuer des travaux de maintenance. Les équipements concernés sont tous types d'équipements notamment ceux d'un banc d'essai de turbomachine axiale ou d'une turbomachine.

### Technique antérieure

Les opérations de maintenance dans le domaine de l'aéronautique sont souvent complexes de par la nature des ensembles à entretenir et des normes qu'il convient de suivre ou des certifications qu'il convient d'obtenir.

Le document EP 3 290 897 A1 décrit un banc d'essai pour turbomachine. Un tel banc peut être muni d'un très grand nombre d'équipements, tels des capteurs, des éléments d'infrastructure ou d'architecture, des éléments isolants phoniques, des éléments de sécurité, etc.

La maintenance des équipements d'un tel banc peut être curative, c'est-à-dire qu'un capteur est remplacé lorsqu'il est détecté comme présentant une malfonction. La maintenance peut aussi être préventive au moyen d'inspections périodiques ou de détecteurs, anticipant les défaillances potentielles. Un banc peut comporter plusieurs milliers de capteurs et autant de câblage à maintenir en fonctionnement. Les interruptions pour effectuer des tâches de maintenance ou des inspections peuvent donc être potentiellement nombreuses et handicapantes pour l'utilisation du banc. De plus, les opérations de maintenance peuvent nécessiter la présence d'experts spécialisés dans ces opérations. Afin de limiter les déplacements des experts, il est parfois possible de réaliser des opérations de maintenance à distance, via une connexion téléphonique entre un technicien local et un expert qui peut se trouver à des milliers kilomètres de l'installation à maintenir. Cette technologie a ses limites notamment à cause de la difficulté que peut avoir le technicien à communiquer ce qu'il observe et la complexité pour l'expert de décrire les opérations à effectuer.

### Résumé de l'invention

### Problème technique

L'invention a pour objectif de résoudre au moins un des problèmes posés par l'art antérieur. Plus précisément, l'invention a pour objectif de rendre les opérations de maintenance plus fiables et plus rapides en assistant les opérateurs de maintenance, leur facilitant l'accès à des données ou à des aides locales ou distantes.

L'invention a également pour objectif de minimiser les temps d'arrêt d'un équipement aéronautique comme un banc d'essai de turbomachine.

### Solution technique

L'invention a pour objet un banc selon la revendication 1, un système selon la revendication 12 et un procédé selon la revendication 14.

Le visiocasque peut comprendre plusieurs écrans pour afficher plusieurs images. Il peut se présenter sous la forme d'un casque ou de lunettes. Le visiocasque peut être à réalité augmentée, c'est-à-dire qu'il comprend des écrans partiellement transparents pour combiner sur une même image, un environnement réel et un environnement virtuel.

Le dispositif de contrôle peut être un dispositif ordinateur comportant un ou plusieurs processeurs, une ou plusieurs mémoires. Le dispositif de contrôle peut également être une unité centrale dédiée, une application sur smartphone ou tablette, etc.

La liaison entre le dispositif de contrôle et le visiocasque d'une part, et entre le dispositif de contrôle et le réseau d'autre part, peut être du type filaire ou non, par exemple via un protocole Wifi^{®}, Bluetooth^{®}, NFC, etc.

Le réseau auquel est connecté le dispositif de contrôle peut être du type LAN, WLAN, Cloud, etc.

Dans le mode d'assistance en ligne, des données perçues par le visiocasque sont communiquées au réseau, comme par exemple l'image et/ou le son, la position ou l'orientation du visiocasque. Dans le mode tutoriel, aucun retour d'informations vers le réseau n'est requis.

Dans le mode d'assistance en ligne, des données sont envoyées depuis un ChatBot ou depuis un expert, connectés au réseau. Dans le mode tutoriel, seules des informations provenant du dispositif de contrôle, locales, sont utilisées. Si les tutoriels peuvent être mis à jour via le réseau, il n'en reste pas moins que le fonctionnement instantané du mode tutoriel est local.

Selon d'autres aspects de l'invention, le banc peut comprendre une ou plusieurs des caractéristiques suivantes, prises isolément ou selon toutes les combinaisons techniques possibles :
- Le visiocasque comprend une caméra et le dispositif de contrôle dispose d'une mémoire sur laquelle est stockée une base de données contenant des données relatives aux équipements aéronautiques à maintenir. Les données stockées peuvent être la taille, forme, ou un modèle numérique de chaque équipement, ainsi que les échéances de maintenance.
- La localisation spatiale du visiocasque est calculée à partir de la comparaison entre les images filmées par la caméra et le contenu de la base de données. Si certains systèmes nécessitent des marqueurs pour localiser le visiocasque, la reconnaissance des équipements qui sont pré-enregistrés dans le dispositif de contrôle permet, sans marqueur, de connaître la localisation et l'orientation du visiocasque.
- Le type et/ou l'état des équipements est identifié à partir de la comparaison entre les images filmées par la caméra et le contenu de la base de données.
- La base de données comprend des attributs pour chaque équipement, parmi lesquels leur modélisation 3D, leur taille, forme, couleur, brillance ou tout autre propriété de l'équipement détectable par la caméra.
- Le système de contrôle dispose d'un accès à la documentation comprenant les préconisations de la maintenance des équipements, éventuellement via le réseau.
- Une interface homme-machine permet d'interroger la documentation et/ou le dispositif de contrôle présélectionne contextuellement des informations de la documentation à afficher en fonction du ou des équipements détectés par la caméra. Cette interface peut être liée au visiocasque (son, gestuelle de la tête ou gestuelle des bras devant la caméra) ou au dispositif de contrôle (clavier, smartphone, etc.).
- Le banc comprend des capteurs de mesure de données relatives aux équipements et le dispositif de contrôle est connecté aux capteurs. La liaison aux capteurs peut être filaire ou non, directe entre le dispositif de contrôle et les capteurs ou par l'entremise de cartes d'acquisitions et/ou de calculateurs dédiés. Les données des capteurs peuvent aussi être transmises au réseau.
- Le dispositif de contrôle ou le réseau dispose d'un module d'intelligence artificielle qui suggère à l'utilisateur, via le visiocasque, des opérations de maintenance à effectuer. Les opérations de maintenances ne sont ainsi pas limitées à l'intention de l'utilisateur mais le visiocasque peut repérer, en dehors des équipements sur lesquels l'utilisateur porte son attention, des équipements qui nécessitent une intervention.
- Le visiocasque indique à l'utilisateur l'action de maintenance à mener et/ou les déplacements dans l'espace à effectuer. Des indications visuelles ou sonores simples peuvent être utilisées telles que des flèches aux abords de l'écran pour indiquer vers où l'utilisateur doit regarder ou se déplacer.
- Le visiocasque comprend une caméra et optionnellement un microphone, et les données capturées par la caméra et/ou le microphone sont transmises au réseau éventuellement via le dispositif de contrôle.
- Le visiocasque comprend un ou plusieurs écrans et optionnellement un ou plusieurs écouteurs, et les données diffusées par le ou les écrans ou par le ou les écouteurs sont issues du réseau éventuellement via le dispositif de contrôle.
- Le banc comprend plusieurs visiocasques et plusieurs dispositifs de contrôle respectifs, reliés au réseau, chacun indépendamment. Par exemple, un autre visiocasque peut être utilisé par un expert qui assistera l'utilisateur du premier visiocasque. L'environnement virtuel représenté par un des visiocasques peut être l'environnement réel de l'autre, et vice versa.
- L'intelligence artificielle est nourrie au moins en partie des informations des capteurs et/ou des images des visiocasques.
- Le banc comprend une interface homme-machine pour actionner la permutation entre les modes de fonctionnement.
- La permutation entre les modes de fonctionnement est automatique et contextuelle. Ce qui peut qualifier le contexte est par exemple : le niveau de difficulté de l'intervention, les qualifications ou autorisations de l'utilisateur, sa localisation, l'équipement sur lequel il s'agit d'intervenir, le degré d'urgence. Selon ces critères mesurables et objectifs, le système peut automatiquement permuter entre le mode tutoriel et l'assistance en ligne, assistance réalisée par un robot (ChatBot) ou un humain. Lorsque le système permet à la fois la permutation manuelle et automatique, la première est prioritaire.

L'invention a également trait à un système comprenant plusieurs bancs interconnectés.

L'invention a également trait à un procédé de maintenance d'un équipement du banc ou de la turbomachine.

Selon un mode avantageux de l'invention, dans le mode de fonctionnement d'assistance en ligne, l'assistance est effectuée par un ChatBot ou une personne humaine, notamment un expert.

L'invention peut également porter sur l'utilisation du système décrit ci-dessus pour effectuer, sur un banc d'essai de turboréacteur d'aéronef, une opération de maintenance d'un équipement aéronautique ou d'un équipement de mesure ; ou pour effectuer, sur des installations aéroportuaires ou dans un aéronef en vol ou au sol, une opération de maintenance d'un équipement aéronautique.

L'invention peut également porter sur un visiocasque d'un banc tel que décrit ci-dessus, comprenant un dispositif d'affichage, un dispositif de contrôle, et optionnellement un microphone et/ou des écouteurs, comprenant en outre une interface homme-machine permettant de sélectionner le mode de fonctionnement du dispositif de contrôle entre au moins un mode tutoriel et un mode d'assistance en ligne.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement précisé.

### Avantages apportés

Le visiocasque permet d'accélérer la résolution des problèmes auxquels peut être confronté un technicien de maintenance. L'emploi d'un seul visiocasque pour suivre à la fois des tutoriels et recevoir une assistance à distance, impliquant une part d'intelligence artificielle, améliore l'ergonomie pour l'utilisateur et le temps de réponse en cas de nécessité d'une intervention de maintenance. Le système peut gérer une multitude d'information à la manière du Big Data et ainsi former un système de maintenance, parfois appelée 4.0, applicable aux bancs d'essai de turbomachine.

### Brève description des dessins

La figure 1 représente un système selon l'invention et son utilisation avec un banc d'essai de turbomachine ;
La figure 2 illustre un visiocasque selon l'invention.

### Description des modes de réalisation

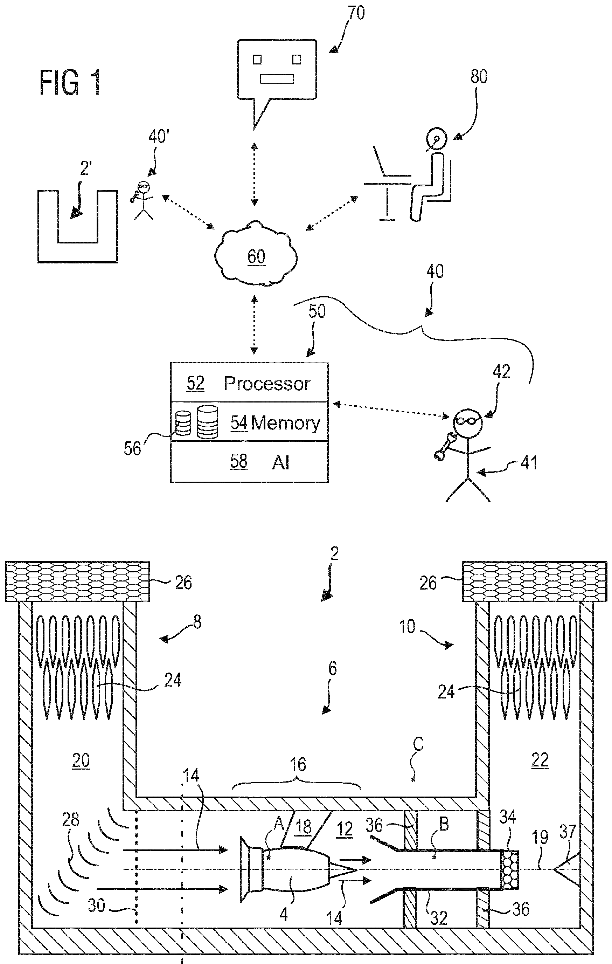

La figure 1 représente de manière simplifiée un banc d'essai 2 de moteur, plus particulièrement un banc d'essai 2 pour turboréacteur 4 d'avion. Le banc d'essai 2 pourrait éventuellement recevoir un avion complet, ou du moins une partie d'avion.

Le banc d'essai 2 forme une construction avec une infrastructure. Il comprend un passage 6 avec une entrée 8 et une sortie 10. Le passage 6 comprend un couloir 12 essentiellement allongé. Sa longueur peut être supérieure ou égale à 60 m. La longueur du couloir 12 permet la circulation en ligne droite d'un flux d'air 14 en limitant la formation de tourbillons nuisant à la qualité de l'essai.

Afin de limiter la résistance à l'écoulement au travers du couloir 12, en particulier la résistance s'opposant à l'entrée d'un flux d'air 14 dans la turbomachine 4, le couloir 12 peut présenter une section de passage supérieure ou égale à 50 m2. Le flux d'air 14 traversant le banc d'essai 2 peut être entraîné par la turbomachine 4 elle-même pendant sa phase de test. Une zone d'installation 16 de la turbomachine 4 est prévue. La zone d'installation 16 peut être une zone de fixation de la turbomachine 4. Elle peut être munie d'un système de fixation 18 auquel la turbomachine 4 est fixée pendant son test. Le bras 18 peut s'étendre verticalement depuis le plafond du couloir 12, à la manière d'une colonne ou d'un poteau. Le système 18 permet de monter la turbomachine 4 avec un déport, et de centrer cette dernière par rapport au milieu du couloir 12, notamment par rapport à un axe central 19 du couloir 12.

Le couloir 12 peut être délimité par des cheminées verticales 20, 22 en entrée 8 et en sortie 10. Elles permettent une admission d'air et un échappement tous deux verticaux et en élévation par rapport au couloir 12. Pour réduire les nuisances sonores, elles peuvent comporter des baffles sonores 24, ou lames acoustiques 24, permettant d'absorber des ondes sonores de manière passive.

Des dispositifs 26 complémentaires peuvent être présents en entrée 8 et en sortie 10 pour éviter des inversions d'écoulements, qui perturberaient les conditions de tests. La configuration en « U » n'est qu'un exemple non limitatif.

A la jonction entre la cheminée amont et le couloir 12, le banc 2 est équipé d'une série de lames de déviation 28. Elles permettent de renvoyer l'air descendant de la cheminée d'entrée 20 dans une direction horizontale. En entrée du couloir 12, le banc 2 présente optionnellement une grille 30 permettant d'intercepter des débris susceptibles de perturber l'essai et d'endommager la turbomachine 4.

En aval de la turbomachine 4, le banc 2 comporte un tube 32 collectant le flux d'air 14 propulsé par la turbomachine 4 et les gaz d'échappement. Le tube collecteur 32 contribue à absorber le bruit généré lors de l'essai. Le tube collecteur 32 comprend un diffuseur 34 à sa sortie. Le diffuseur 34 peut être dans la cheminée de sortie 22.

Le tube collecteur 32 peut être maintenu dans le banc 2 à l'aide de deux cloisons 36. Ces cloisons 36 s'étendent verticalement et transversalement dans le couloir 12. Elles forment des séparations étanches, qui permettent de contenir le flux 14 issu la turbomachine 4.

Pour dévier le flux issu du tube collecteur 32, et du diffuseur 34, un cône 37 peut être mis dans le prolongement du tube collecteur 32. Il peut être fixé à une paroi verticale en fin de couloir 12. Sa pointe peut coïncider avec l'axe central 19.

Le banc 2 comprend également un très grand nombre d'équipements du type capteur ou éléments de construction, notamment. Par exemple, un capteur de vitesse A de rotation du moteur 4, un capteur B de gaz d'échappement et un capteur sonore C à l'extérieur du passage de gaz. D'autres capteurs permettent de renseigner, par exemple, une vitesse d'écoulement d'un flux, la température de l'air, la pression, les vibrations, etc.

Un système d'assistance à la maintenance 40 comprend un visiocasque 42 porté par un opérateur 41. Le visiocasque est connecté à un dispositif de contrôle 50. Celui-ci peut être implémenté sur ordinateur, comprenant un processeur 52 et une mémoire 54 pour stocker des informations sous forme de bases de données 56. Dans les bases de données peuvent être enregistrées toutes les données utiles à la gestion de la maintenance.

Les données peuvent être relatives à l'identification des équipements par exemple un nuage de points, qui par comparaison de l'image perçue par une caméra sur le visiocasque permet d'identifier de quel équipement il s'agit.

Les données peuvent aussi être relatives à l'utilisation du banc et comprendre les valeurs instantanées et passées des paramètres relatifs à la turbomachine testée et/ou aux turbomachines ayant été testées sur le banc, parmi lesquels au moins l'un des paramètres suivants : la puissance ou la poussée de la turbomachine, le type de machine, les cycles de pression ou de tours/minute appliqués, le régime moteur instantané, la température des gaz d'échappement, la poussée instantanée, l'amplitude et/ou la fréquence des vibrations générées, les émissions acoustiques de la turbomachine, les émissions de gaz. Également, les pannes passées peuvent être analysées et répertoriées dans la base de données.

En outre, les données peuvent comprendre : la durée d'utilisation cumulée ou l'âge du banc, la nature des infrastructures comme notamment le type de béton utilisé ou les dimensions du banc, la présence de fissure dans les infrastructures, les émissions acoustiques mesurées à l'extérieur du banc, les émissions polluantes mesurées à l'extérieur du banc. Les cycles d'utilisation ou les cycles appliqués aux moteurs peuvent être répertoriés. Des fuites de lubrifiant moteur peuvent aussi être répertoriées car celles-ci peuvent être nuisibles pour les fondations du banc. La température extérieure peut être suivie également.

Les équipements à maintenir sont par exemple : les filtres acoustiques, les infrastructures et notamment les fondations en béton, les éléments de sécurité, le démarreur électromagnétique, les capteurs, les cartes d'acquisition, les logiciels.

Les actions à mener sur l'équipement peuvent être une réparation, un remplacement, une inspection, un test, un nettoyage, un reconditionnement, une révision, etc. Les actions de maintenance ne comprennent pas seulement l'intervention en soi mais également la logistique pour laquelle une assistance peut parfois aussi être nécessaire (déplacement de personnes, commande de matériel, formalités administratives, certification, enregistrement des opérations de maintenance, etc.).

Le dispositif de contrôle 50 est connecté, via le réseau 60 à une assistance à distance, réalisée soit par un robot (« ChatBot ») 70, soit par un expert 80. Le ChatBot 70 ou l'expert 80 reçoivent l'image et le son issus du visiocasque 42 ainsi que d'autres données provenant du dispositif de contrôle, notamment les données des capteurs. En retour, le ChatBot 70 ou l'expert 80 peuvent communiquer des images et des sons qui seront diffusés par le visiocasque 42.

Le dispositif de contrôle 50 peut aussi être connecté, via le réseau 60 à d'autres bancs d'essais 2' et/ou d'autres systèmes d'assistance 40', afin que les systèmes puissent s'influencer les uns les autres pour améliorer les opérations de maintenance à plus grande échelle.

Le dispositif de contrôle 50 peut comprendre un module d'intelligence artificielle 58 pouvant communiquer avec des modules équivalents d'autres dispositifs 40'.

L'intelligence artificielle 58 permet de concaténer une très grande quantité de données afin de suggérer des opérations de maintenance.

Par exemple, un indice de probabilité de défaillance, propre à chacun des équipements peut être évalué et en fonction des mesures effectuées par les capteurs et des connaissances acquises par l'intelligence artificielle 58, cet indice peut évoluer jusqu'à une valeur critique prédéterminée qui déclenche une information pour l'utilisateur, lui intimant d'effectuer l'opération de maintenance appropriée.

Le système peut créer de manière autonome au fur et à mesure du temps ses propres indices et ses propres règles pour optimiser la maintenance. Les règles peuvent devenir très complexes en peu de temps. Les différents systèmes de différents bancs communiquent de manière à ce que les intelligences artificielles coopèrent. Des protocoles de répartition de la charge de calcul entre les différents bancs peuvent être utilisés.

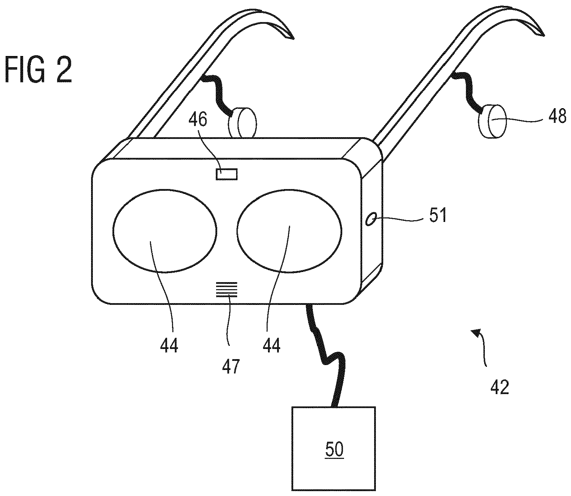

La figure 2 décrit schématiquement un système selon l'invention. Le système comprend un visiocasque 42. Celui-ci est muni de deux écrans 44 partiellement transparent pour créer une image combinée d'un environnement réel et d'un environnement virtuel. Le visiocasque 42 comprend également une caméra 46, un microphone (47) et des écouteurs 48. Le visiocasque 42 comprend aussi des moyens de localisation dans l'espace (accéléromètre, moyens externes de localisation du casque, etc.). Le visiocasque comprend également, ou est connecté à, un dispositif de contrôle 50. Le visiocasque 42 ou le dispositif de contrôle 50 communique avec les capteurs et avec le réseau via des moyens de communication appropriés.

Le visiocasque 42 ou le dispositif de contrôle 50 peut disposer d'un permutateur 51 sous la forme d'un bouton ou d'un interrupteur pour permettre à l'utilisateur de permuter entre les différents modes d'assistance.

La permutation peut alternativement être opérée de façon logicielle, sur requête de l'utilisateur, ou de manière automatique selon le contexte de l'intervention.

Le dispositif de contrôle 50 peut être incarné par un ordinateur avec un programme d'ordinateur qui produit les images virtuelles.

Le dispositif de contrôle 50 ou le visiocasque 42 peut aussi émettre un signal d'alerte en cas d'urgence, de détection d'un danger par exemple. En complément, le visiocasque 42 peut chercher à identifier la présence de certaines entités dans l'environnement de l'utilisateur. La base de données peut comprendre des images virtuelles de référence d'êtres humains ou d'outils employés pour les opérations de maintenance. En cas de détection d'un outil ou d'une personne, un signal d'alarme peut être produit et envoyé.

## Revendications

1. Banc d'essai (2) pour une turbomachine (4), comprenant :
- un passage (6) de flux d'air de la turbomachine (4), avec une entrée (8) et une sortie (10) ;
- des capteurs (A, B, C) de mesure de données relatives à une turbomachine (4) ou au banc (2) ; **caractérisé en ce que** le banc d'essai comprend :
- un dispositif de contrôle (50) connecté aux capteurs (A, B, C) et connecté à un réseau (60) ;
- un visiocasque (42) de réalité augmentée comprenant une caméra (46), connecté au dispositif de contrôle (50) et destiné à indiquer à un utilisateur une opération de maintenance à réaliser sur un équipement (2, 4, ..., 37, A, B, C) du banc (2) ou de la turbomachine (4), le dispositif de contrôle (50) étant apte à permuter entre au moins deux modes de fonctionnement, dont un mode tutoriel dans lequel les informations diffusées par le visiocasque (42) sont uniquement issues du dispositif de contrôle (50) et un mode d'assistance en ligne où des informations diffusées par le visiocasque (42) sont issues du réseau (60) avec lequel le dispositif de contrôle (50) interagit et des données capturées par la caméra (46) sont transmises audit réseau (60).

2. Banc selon la revendication 1, **caractérisé en ce que** le dispositif de contrôle (50) dispose d'une mémoire (54) sur laquelle est stockée une base de données (56) comprenant des données relatives aux équipements aéronautiques (2, 4, ..., 37, A, B, C) à maintenir.

3. Banc selon la revendication 2, **caractérisé en ce que** le dispositif de contrôle (50) est apte à localiser spatialement le visiocasque (42) à partir de la comparaison entre les images filmées par la caméra (46) et le contenu de la base de données (56).

4. Banc selon la revendication 2 ou 3, **caractérisé en ce que** le dispositif de contrôle (50) est apte à identifier le type et/ou l'état des équipements (2, 4, ..., 37, A, B, C) à partir de la comparaison entre les images filmées par la caméra (46) et le contenu de la base de données (56).

5. Banc selon l'une des revendications 3 ou 4, **caractérisé en ce que** la base de données (56) comprend des attributs pour chaque équipement (2, 4, ..., 37, A, B, C), parmi lesquels leur modélisation 3D, leur taille, forme, couleur, brillance ou tout autre propriété de l'équipement (2, 4, ..., 37, A, B, C) détectable par la caméra.

6. Banc selon l'une des revendications 1 à 5, **caractérisé en ce que** le dispositif de contrôle (50) dispose d'un accès à la documentation comprenant les préconisations de la maintenance des équipements (2, 4, ..., 37, A, B, C), éventuellement via le réseau (60).

7. Banc selon la revendication 6 en combinaison de la revendication 4, **caractérisé en ce qu'**il comprend une interface homme-machine permettant d'interroger la documentation et/ou le dispositif de contrôle (50) présélectionne contextuellement des informations de la documentation à afficher en fonction du ou des équipements (2, 4, ..., 37, A, B, C) détectés par la caméra (46) et optionnellement le dispositif de contrôle (50) ou le réseau (60) dispose d'un module d'intelligence artificielle (58) qui suggère à l'utilisateur, via le visiocasque (42), des opérations de maintenance à effectuer.

8. Banc selon l'une des revendications 1 à 7, **caractérisé en ce que** le visiocasque (42) comprend un microphone (47), et les données capturées par la caméra (46) et/ou le microphone (47) sont transmises au réseau (60) via le dispositif de contrôle (50).

9. Banc selon l'une des revendications 1 à 8, **caractérisé en ce que** le visiocasque (42) comprend un ou plusieurs écrans (44) et optionnellement un ou plusieurs écouteurs (48), et les données diffusées par le ou les écrans (44) ou par le ou les écouteurs (48) sont issues du réseau (60) éventuellement via le dispositif de contrôle (50).

10. Banc selon l'une des revendications 1 à 9, **caractérisé en ce que** le visiocasque (42) comprend une interface homme-machine (51) pour actionner la permutation entre les modes de fonctionnement.

11. Banc selon l'une des revendications 1 à 10, **caractérisé en ce que** la permutation entre les modes de fonctionnement est automatique et contextuelle.

12. Système comprenant une pluralité de bancs selon l'une des revendications 1 à 11, **caractérisé en ce qu'**il comprend plusieurs visiocasques (42) respectifs et plusieurs dispositifs de contrôle (50) respectifs, chacun indépendamment relié au réseau (60).

13. Système selon la revendication 12 avec des bancs selon la revendication 7, **caractérisé en ce que** le module d'intelligence artificielle (58) est nourri en partie avec les informations délivrées par les capteurs (A, B, C) et/ou par les images des visiocasques (42).

14. Procédé de maintenance d'un équipement aéronautique (2, 4, ..., 37, A, B, C) sur un banc d'essai (2) selon l'une des revendications 1 à 13, le procédé comprenant une étape de sélection du mode de fonctionnement du système et une étape de maintenance d'un équipement.

15. Procédé selon la revendication 14 **caractérisé en ce que** dans le mode de fonctionnement d'assistance en ligne, l'assistance est effectuée par un ChatBot (70) ou un utilisateur (80).

## Patentansprüche

1. Prüfstand (2) für eine Turbomaschine (4), der Folgendes umfasst:
- einen Durchgang (6) für den Luftstrom der Turbomaschine (4), der einen Einlass (8) und einen Auslass (10) umfasst;
- Sensoren (A, B, C) zur Messung von Daten, die sich auf eine Turbomaschine (4) oder den Prüfstand (2) beziehen;
**dadurch gekennzeichnet, dass** der Prüfstand Folgendes umfasst:
- ein Steuergerät (50), das mit den Sensoren (A, B, C) verbunden ist und an ein Netzwerk (60) angeschlossen ist;
- eine mit einer Kamera (46) versehene kopfgetragene Augmented-Reality-Anzeige (42), die mit dem Steuergerät (50) verbunden und dazu bestimmt ist, einem Benutzer einen an einem Ausrüstungsteil (2, 4, ..., 37, A, B, C) des Prüfstands (2) oder der Turbomaschine (4) durchzuführenden Wartungsvorgang anzuzeigen, wobei das Steuergerät (50) zwischen mindestens zwei Betriebsmodi umschalten kann, einschließlich eines Lernmodus, in dem die von der kopfgetragenen Anzeige (42) ausgestrahlten Informationen ausschließlich vom Steuergerät (50) stammen, und eines Online-Hilfsmodus, in dem die von der kopfgetragenen Anzeige (42) ausgestrahlten Informationen aus dem Netzwerk (60) stammen, mit dem das Steuergerät (50) zusammenwirkt, und die von der Kamera (46) aufgezeichneten Daten an das genannte Netzwerk (60) übertragen werden.

2. Prüfstand nach Anspruch 1, **dadurch gekennzeichnet, dass** das Steuergerät (50) einen Speicher (54) aufweist, in dem eine Datenbank (56) mit Daten über die zu wartende Flugzeugausrüstung (2, 4, ..., 37, A, B, C) gespeichert ist.

3. Prüfstand nach Anspruch 2, **dadurch gekennzeichnet, dass** das Steuergerät (50) in der Lage ist, die kopfgetragene Anzeige (42) anhand eines Vergleichs zwischen den von der Kamera (46) gefilmten Bildern und dem Inhalt der Datenbank (56) räumlich zu lokalisieren.

4. Prüfstand nach Anspruch 2 oder 3, **dadurch gekennzeichnet, dass** das Steuergerät (50) in der Lage ist, den Typ und/oder den Zustand des Ausrüstungsteils (2, 4, ..., 37, A, B, C) anhand eines Vergleichs zwischen den von der Kamera gefilmten Bildern (46) und dem Inhalt der Datenbank (56) zu erkennen.

5. Prüfstand nach einem der Ansprüche 3 oder 4, **dadurch gekennzeichnet, dass** die Datenbank (56) Attribute für jeden Ausrüstungsteil (2, 4, ..., 37, A, B, C) enthält, einschließlich ihrer 3D-Modellierung, Größe, Form, Farbe, Helligkeit oder jeder anderen Eigenschaft des Ausrüstungsteils (2, 4, ..., 37, A, B, C), der von der Kamera erkannt werden kann.

6. Prüfstand nach einem der Ansprüche 1 bis 5, **dadurch gekennzeichnet, dass** die Kontrollvorrichtung (50) Zugang zu einer Dokumentation mit Wartungsempfehlungen für die Geräte (2, 4, ..., 37, A, B, C) hat, möglicherweise über das Netzwerk (60).

7. Prüfstand nach Anspruch 6 in Verbindung mit Anspruch 4, **dadurch gekennzeichnet, dass** sie eine Mensch-Maschine-Schnittstelle umfasst, die die Abfrage der Dokumentation ermöglicht, und/oder dass das Steuergerät (50) Informationen aus der Dokumentation kontextabhängig vorauswählt, die entsprechend der oder den von der Kamera (46) erfassten Ausrüstungsteile (2, 4, ..., 37, A, B, C) angezeigt werden sollen, und dass das Steuergerät (50) oder das Netzwerk (60) optional über ein Modul für künstliche Intelligenz (58) verfügt, das dem Benutzer über die kopfgetragene Anzeige (42) vorschlägt, welche Wartungsarbeiten durchzuführen sind.

8. Prüfstand nach einem der Ansprüche 1 bis 7, **dadurch gekennzeichnet, dass** die kopfgetragene Anzeige (42) ein Mikrofon (47) umfasst und die von der Kamera (46) und/oder dem Mikrofon (47) aufgezeichneten Daten über das Steuergerät (50) an das Netzwerk (60) übertragen werden.

9. Prüfstand nach einem der Ansprüche 1 bis 8, **dadurch gekennzeichnet, dass** die kopfgetragene Anzeige (42) einen oder mehrere Bildschirme (44) und optional einen oder mehrere Kopfhörer (48) umfasst und die von dem Bildschirm oder den Bildschirmen (44) oder dem Kopfhörer oder den Kopfhörern (48) ausgestrahlten Daten vom Netzwerk (60) abgerufen werden, optional über das Steuergerät (50).

10. Prüfstand nach einem der Ansprüche 1 bis 9, **dadurch gekennzeichnet, dass** die kopfgetragene Anzeige (42) eine Mensch-Maschine-Schnittstelle (51) zum Umschalten zwischen Betriebsmodi umfasst.

11. Prüfstand nach einem der Ansprüche 1 bis 10, **dadurch gekennzeichnet, dass** das Umschalten zwischen den Betriebsarten automatisch und kontextabhängig erfolgt.

12. System mit einer Vielzahl von Prüfständen nach einem der Ansprüche 1 bis 11, **dadurch gekennzeichnet, dass** es eine Vielzahl von kopfgetragenen Anzeigen (42) und eine Vielzahl von Steuergeräten (50) umfasst, die jeweils unabhängig voneinander mit dem Netzwerk (60) verbunden sind.

13. System nach Anspruch 12, das die Prüfstände nach Anspruch 7 umfasst, **dadurch gekennzeichnet, dass** das Modul für künstliche Intelligenz (58) teilweise von Informationen unterstützt wird, die von den Sensoren (A, B, C) und/oder den von den kopfgetragenen Anzeigen (42) gelieferten Bildern stammen.

14. Verfahren zur Wartung einer Flugzeugausrüstung (2, 4, ..., 37, A, B, C) auf einem Prüfstand (2) nach einem der Ansprüche 1 bis 13, wobei das Verfahren einen Schritt zur Auswahl des Betriebsmodus des Systems und einen Schritt zur Wartung einer Ausrüstung umfasst.

15. Verfahren nach Anspruch 14, **dadurch gekennzeichnet, dass** im Betriebsmodus Online-Support die Unterstützung durch einen ChatBot (70) oder einen Benutzer (80) geleistet wird.

## Claims

1. Test bench (2) for a turbomachine (4) comprising:
- a passage (6) of airflow of the turbomachine (4), with an inlet (8) and an outlet (10);
- sensors (A, B, C) for measuring data relating to the turbomachine (4), or relating to the bench (2);
**characterized in that** the test bench comprises:
- a control device (50) connected to the sensors (A, B, C) and connected to a network (60); and
- an augmented reality head-mounted display (42) comprising a camera (46), connected to the control device (50) and aimed at directing a user to carry out a maintenance operation on an equipment (2, 4, ..., 37, A, B, C) of the bench (2) or of the turbomachine (4), the control device (50) being switchable between at least two modes of operation, including a tutorial mode in which the information broadcasted by the head-mounted display (42) is provided solely by the control device (50) and an online assistance mode in which information broadcasted by the head-mounted display (42) is provided by the network (60) with which the control device (50) interacts and the data captured by the camera (46) are transmitted to the network (60).

2. Bench according to claim 1, **characterized in that** the control device (50) has a memory (54) on which is stored a database (56) including data relating to the equipment (2, 4, ..., 37, A, B, C) to be maintained.

3. Bench according to claim 2, **characterized in that** the control device (50) is able to localize spatially the head-mounted device (42) from the comparison between the images captured by the camera (46) and the content of the database (56).

4. Bench according to claim 2 or 3, **characterized in that** the control device (50) is able to identify the type and/or state of equipment (2, 4, ..., 37, A, B, C) from the comparison between the images captured by the camera (46) and the content of the database (56).

5. Bench according to one of claims 3 or 4, **characterized in that** the database (56) comprises attributes for each equipment (2, 4, ..., 37, A, B, C), among which their 3D modelling, size, shape, colour, brightness or any other feature of the equipment (2, 4, ..., 37, A, B, C) detectable by the camera.

6. Bench according to one of claims 1 to 5, **characterized in that** the control device (50) is configured to access the documentation including the recommendations of the maintenance of equipment (2, 4, ..., 37 , A, B, C), preferably via the network (60).

7. Bench according to claim 6 in combination with claim 4, **characterized in that** it comprises a human-machine interface for examining the documentation and/or the control device (50) preselects contextually information from the documentation to display as a function of the equipment (2, 4, ..., 37, A, B, C) detected by the camera (46), and optionally the control device (50) or the network (60) has an artificial intelligence module (58) which suggests to the user, via the HMD (42), maintenance operations to be performed.

8. Bench according to one of claims 1 to 7, **characterized in that** the head-mounted display (42) comprises a microphone (47), and the data captured by the camera (46) and/or the microphone (47) are transmitted to the network (60) possibly via the control device (50).

9. Bench according to one of claims 1 to 8, **characterized in that** the head-mounted display (42) comprises one or more screens (44) and optionally one or more headphones (48), and the data disseminated by the screen or screens (44) or by the earphones (48) are provided from the network (60) possibly via the control device (50).

10. Bench according to one of claims 1 to 9, **characterized in that** the head-mounted display (42) comprises a human-machine interface (51) for operating the switching between the operation modes.

11. Bench according to one of claims 1 to 10, **characterized in that** the permutation between the operating modes is automatic and contextual.

12. System comprising a plurality of benches according to one of claims 1 to 11, **characterized in that** it comprises several respective head-mounted displays (42) and several respective control devices (50), each being independently connected to the network (60).

13. System according to claim 12, with benches according to claim 7, **characterized in that** the artificial intelligence module (58) is fed in part with information provided by the sensors (A, B, C) and/or by the images of the head-mounted displays (42).

14. Method of maintaining an aeronautical equipment (2, 4, ..., 37, A, B, C) on a test bench (2) according to one of claims 1 to 13, the method comprising a step of selecting the system operation mode and a step of maintenance of an equipment.

15. Method of claim 15 **characterized in that** in the online assistance operating mode, the assistance is performed by a ChatBot (70) or a user (80).
